# EUROPEAN PATENT APPLICATION

(11) **EP 2 336 964 A1**
(43) Date of publication of application: **22.06.2011**
(21) Application number: 10251938.6
(22) Date of filing: 16.11.2010
(51) Int. Cl.: G06Q 30/00, G02C 13/00

(54) **Method and system for selecting eyeglass frames**

(30) Priority: 17.11.2009 GB 0920129
(71) Applicant: Nova Resources s.a.r.l., 2636 Luxembourg (LU)
(72) Inventor: Eriksson, Carl Erik, 182 61 Djursholm (SE)
(74) Representative: Mabey, Katherine Frances

(57) **Abstract**

A method and system for use in selecting eyeglass frames comprises a local user providing via a local terminal a facial image and information for use in determining a scale for the facial image. The scaling information is a distance between the pupil centres of the eyes in the facial image. The facial image and the scaling information provided by the user are provided to a central controller. The facial image is displayed and the user indicates the pupillary distance in the facial image.

The system determines a scale for the facial image using the information provided by the user, and uses the determined scale for the facial image to superimpose the facial image and an image of an eyeglass frame, to thereby create a composite image to be viewed by a local user. The user may then place an order for the eyeglass frame.

## Description

The present invention relates to methods and systems for aiding a user in the selection of eyeglass frames. More specifically, the invention relates to the creation of composite images from facial images and images of eyeglass frames, which, at least in preferred embodiments, allow a user, such as a wearer of eyeglasses, to see how a particular eyeglass frame might appear on their face.

In recent years, people have begun to buy prescription eyeglasses via the Internet, instead of from an opticians or another traditional eyeglass frame suppliers. A difficulty with buying eyeglass frames from the Internet, however, is that the user has traditionally only been able to view images of the available eyeglass frames. In other words, the user has had to buy the eyeglass frames without knowing whether the chosen frames will suit his or her face.

In view of this, it is now known to allow a user to upload an image of their face to a retailer's website, wherein various software programs have been developed that allow a composite image of the user wearing a selected eyeglass frame to be formed from the user's uploaded picture and an image of the selected eyeglass frame provided by the retailer.

The Applicant has recognised, however, that the composite images currently provided by such systems are often of a quality such that they are of little or no use to the user in helping them to choose a new eyeglass frame. It is therefore believed that there remains scope for improving the composite images that are currently created in conventional systems.

The present invention, at least in preferred embodiments, provides a method and system for enabling a user to create and view a correctly scaled composite image showing how a selected eyeglass frame might look on their face.

In accordance with an aspect of the present invention, there is provided a method, comprising:
a local user providing a facial image and information for use in determining a scale for the facial image; and
receiving, at a central controller, the facial image and the information provided by the user;
the method further comprising:
determining a scale for the facial image using the information provided by the user; and
using the determined scale for the facial image to superimpose the facial image and an image of an eyeglass frame, to thereby create a composite image to be viewed by a local user.

The present invention extends to a system for carrying out the steps of the method in accordance with any of its aspects or embodiments.

Thus, in accordance with a further aspect of the present invention, there is provided a system, comprising:
a central controller for receiving a facial image and information for use in determining a scale for the facial image from a local user;
means for determining a scale for the facial image using the information provided by the user; and
means for using the determined scale for the facial image to superimpose the facial image and an image of an eyeglass frame, to thereby create a composite image to be viewed by a local user.

Thus, in accordance with the invention, a method and system is provided which enables a user to provide an image of their face, or alternatively a facial image of someone for whom they are selecting the eyeglass frames, together with information that can be used to determine a scale for the facial image (i.e. "scaling information"). As will be discussed in more detail below, the scaling information may be separate from the facial image or it may be contained within the facial image itself. A composite image is then formed using the image and information provided by the user that shows an eyeglass frame, which has preferably been selected by the user, suitably positioned and sized on the face of the person in the provided image. In other words, the information provided by the user, and which is subsequently used to at least determine a scale for the facial image, is used to ensure that the facial image and the image of the eyeglass frame of a corresponding scale when the images are superimposed on each other to form the composite image. This allows the user to select an eyeglass frame in the knowledge that the eyeglass frame is a good match to their face or to the face of the person for whom they are choosing the eyeglass frames.

The method of the present invention is preferably implemented over a distributed system. Thus, the user preferably provides the facial image and the information for use in determining a scale for the facial image at a first location, and the image and information is received by a central controller at a second, different location. For example, the user may be located at a location in a different country to the central controller.

It will be appreciated that the method and system of the present invention is preferably computer implemented. For example, the method and system may be, and preferably are, internet-based.

As will be discussed in more detail below, the local user preferably uses a local user terminal. For example, the local user can use the local terminal to provide one or both of the facial image and the information for use in determining a scale for the facial image. The local user terminal can also be used by the local user to view the composite image that is created by the present invention. The local user terminal may be of any type, and may, for example, be a mobile or desktop computer, mobile telecommunications device, etc.

Thus, the system of the present invention preferably further comprises a local user terminal in communication with the central controller, wherein the local user preferably uses the terminal to provide at least one, and preferably both, of the facial image and the scaling information.

As will be discussed in more detail below, the central controller is preferably a server. The server, at least in preferred embodiments, is operably connected to the local user terminal, and preferably to a plurality of such local user terminals, via a communications link, such as the Internet.

In accordance with the present invention, a local user provides a facial image, which is subsequently received at the central controller.

The facial image provided by the local user to the central controller can be of any suitable and desired form, and may, for example, be in a digital or physical form.

As will be appreciated, the facial image may be an image of the local user, and in such embodiments the local user will typically be the end user, i.e. the person who intends to use/wear the eyeglass frames being viewed in the composite image. Alternatively, the facial image may be an image of a person other than the local user, e.g. a person for whom the local user is choosing eyeglass frames to subsequently use/wear. Accordingly, it will be recognised that the facial image sent to the central controller may not always be an image of the face of the local user who is providing the image.

It will also be appreciated that the facial image preferably comprises a front face image of the end user, and will preferably comprise an image showing the entire face of the user, e.g. in the manner of a passport photograph.

When the facial image is provided by the user in a digital format, the facial image is preferably a computer readable image file, e.g. such as in the form of a jpeg, tiff, bmp, png, gif or raw file. The user, in such embodiments, preferably provides the facial image to the central controller over a communication link, such as the Internet, e.g. via a website. For example, the user preferably uploads a copy of the facial image from the local user terminal as a computer readable image file to the website, and the computer readable image file is then sent via the Internet to the central controller.

In a preferred embodiment, the method further comprises the step of displaying the facial image to the user, e.g. before the image is sent to the central controller, and the system preferably comprises means for carrying out this step. As will be appreciated, this allows the user to confirm that the correct image will be received by the central controller, i.e. that the correct image has been uploaded to website, and to confirm that the image is of a sufficient quality (resolution). Preferably, the system is configured such that the local user can choose, i.e. provide an indication, to either send the current facial image to the central controller or provide a new facial image after viewing the current facial image, e.g. that was uploaded to the website.

It is also contemplated by the Applicant, albeit in less preferred embodiments, that instead of providing the facial image in a digital format, the local user may supply the image in a physical form, e.g. as a photograph. The supplier (i.e. the person or company operating the system), on receipt of the image, can then perform the steps necessary to convert the image from its physical form into an appropriate digital format (e.g. by using a scanner to take a digital copy of the photograph), and can then provide the digital facial image to the central controller.

Accordingly, it will be appreciated that the facial image received by the central controller may be the facial image provided the user, e.g. a computer readable image file provided by the local user, or it may be a facial image that has been obtained or derived from the facial image provided by the user. For example, the received facial image may be, as discussed above, a digital copy of a photograph supplied by the user, or it may be computer readable image file in a different format to that provided by the user (i.e. a converted or reformatted image file).

Thus, the method of the present invention preferably comprises a step of converting the facial image provided by the local user into a form that is receivable by the central controller.

In accordance with the present invention, a local user, in addition to the facial image, provides information that can be used to determine a scale for the facial image (i.e. scaling information).

The term "scale" as used herein is intended, unless the context requires otherwise, to refer to the ratio of a distance in the image to the corresponding physical distance. For example, if the distance between a first point and second point in the image is 'x', and the corresponding distance between the physical locations corresponding to the first and second points is 'y' - noting that the distance 'y' is the straight line distance between the two locations in question since the image is a two-dimensional view - then the scale of the image will be x:y.

The scaling information provided by the local user may be separate from the facial image, thereby meaning that the local user provides at least two things to the central controller. Alternatively, it is also contemplated that the scaling information may be contained within the facial image itself, e.g. by the local user providing a specially created facial image as is discussed in more detail below. In such embodiments, the user may therefore only provide the facial image to the central controller.

In those embodiments in which the scaling information is separate from the facial image, and as will be discussed in more detail below, the scaling information provided by the user may be a physical distance (i.e. 'y' in the above example), or it may be both a physical distance and a distance in the image (i.e. 'x' in the above example), and can be of any suitable and desired form.

In a particularly preferred embodiment, the scaling information will comprise a physical distance between two points that are viewable in the facial image provided by the user. Indeed, in some embodiments, the scaling information may consist only of such a physical distance.

The scaling information may therefore comprise the physical distance between two points in non-facial portions of the image (provided the two points were at substantially the same distance from the image grabber, e.g. camera, used to create the facial image as the face). Preferably, however, the scaling information comprises the physical distance between first and second points on the face, and most preferably the physical distance between first and second points of the eyes.

In a particularly preferred embodiment, the scaling information provided by the user comprises the physical distance between a point of the iris or pupil of one eye and a point of the iris or pupil of the other eye. For example, the scaling information may be the distance between the inner or outer edge of the iris in one eye and the inner or outer edge of the iris in the other eye. The scaling information may also be the distance between the centres of the pupils in each eye.

Thus, in a particularly preferred embodiment of the present invention, the scaling information comprises the pupillary distance (PD), sometimes also known as the interpupillary distance (IPD). The pupillary distance as known in the art, is the distance (typically given in millimetres) between the centres of the pupils in each eye.

Using the pupillary distance as, or at least as part of, the scaling information has a number of advantages, which will be discussed in more detail below. One particular benefit is that the pupillary distance is typically measured by the optician, optometrist or other eye care professional during the course of an eye test, and will therefore often be found on the optical prescription given to a person following their eye test. Alternatively, a person can, if required, easily measure the pupillary distance themselves, e.g. using a ruler and a mirror.

Thus, in a preferred embodiment, the present invention comprises means for and a step of a local user providing a facial image and the pupillary distance for the person in the facial image. The pupillary distance may be obtained from the optical prescription for the person in the facial image, or it may be determined from a direct measurement made by the local user and/or the person in the facial image.

The information for use in determining a scale for the facial image can be provided by the user in any suitable and desired form. In a preferred embodiment, however, the user provides the information to the central controller over a communication link, such as the Internet, e.g. via a website. For example, the information, which at least in preferred embodiments comprises a numerical value, e.g. the pupillary distance, can be input via the user using the local user terminal, e.g. using a keyboard or other suitable input device.

It is also contemplated, albeit in less preferred embodiments, that the local user may provide the scaling information, in those embodiments in which the information can be found on the end user's optical prescription (e.g. the pupillary distance), by uploading a copy of the optical prescription to the website from the local user terminal or by sending a copy of the optical prescription to supplier, e.g. by mail. The supplier on receipt of the optical prescription can then perform the steps necessary to provide the scaling information to the central controller.

In accordance with the present invention, the information provided by the local user is used to determine a scale for the facial image.

As will be appreciated, the information may be used to determine the scale for the facial image in the state or format that it was received by the central controller. Alternatively, it may be first be converted into another form as needed or desired before it is used to determine the scale of the facial image.

In those embodiments in which the scaling information provided by the user comprises both a physical distance and the corresponding distance in the facial image, then the scale of the facial image can be determined directly from this information. However, in the particularly preferred embodiments of the present invention in which the scaling information comprises, and may consist only of, the physical distance between a first point and a second point that are viewable in the facial image, then the step of determining a scale for the facial image comprises a step of determining the distance in the facial image between the first point and the second point as they appear in the facial image.

For example, if the physical distance provided by the user is the maximum width or height of the nose, then the step of determining a scale for the facial image preferably comprises a step of determining the maximum width or height of the nose in the facial image. Similarly, and in the particularly preferred embodiments of the present invention in which the local user provides the (physical) pupillary distance for the person in the facial image, the method preferably comprises a step of determining the pupillary distance in the facial image, and the system is preferably arranged to carry out such a step.

As will be appreciated, the distance in the facial image between the first point and the second point as they appear in the facial image may be determined in any suitable and desired manner. For example, in some embodiments, the distance in the facial image, i.e. the "facial image distance", may be determined automatically by the system or the facial image distance may be determined using (additional) information provided by the user.

In embodiments of the present invention in which the distance between first and second points in the facial image is determined automatically, the system is preferably configured to automatically detect the first and second points in the facial image. For example, the system preferably comprises means, such as a processor, for analysing the facial image to determine the position of the first and second points in the image, e.g. using techniques and/or software programs known in the art.

Preferably, the first and second points in the facial image are the centres of the pupils. In such embodiments, facial analysis software, such as that known in the art, is preferably used to search for two substantially circular objects in the facial image that are significantly darker in comparison to the surrounding areas. The result of this search should identify the both irises, which are strongly contrasted from the sclera (i.e. the white part of the eyes). Once the irises have been identified, then the software determines the centre of the substantially circular objects, thereby identifying the centres of the pupils in each eye.

It will be recognised that an advantage of using the pupillary distance as the physical distance provided by the user, thereby requiring the position of the pupil centres in the facial image to be determined, is that the pupil centres are more easily determined using automatic detection techniques in comparison to other areas of the face. In particular, those skilled in the art will appreciate that there is typically a good contrast between the irises and pupils and the surrounding parts of the eyes (e.g. sclera) and face, thereby allowing the location of the pupils in the facial image to determined with greater ease. Moreover, as the irises are typically circular in shape, the centre of each pupil can also be determined with comparative ease (once the irises themselves have been located).

As those skilled in the art will appreciate, in embodiments wherein the position, and thus distance between, first and second points in the facial image are determined automatically, the identity of the first and second points must either be known to or obtainable by the system, for example, by being predefined (e.g. as the physical distance provided by the user always relates to the distance between the same two points) or by the local user providing an indication as to the identity of the two points as part of the information for use in determining a scale for the facial image.

In a preferred embodiment, and wherein the location of the two points in the facial image is determined automatically, the method further comprises the step of displaying the facial image to the local user indicating the determined locations of the first and second points, and the system preferably comprises means for carrying out this step. As will be appreciated, this allows the user to confirm that the two locations determined by the system are correct. Preferably, the system is configured such that the local user can provide an indication to the central controller confirming whether or not the locations have been determined correctly. In the event that one or other, or both, of the automatically determined locations are incorrect, the system is preferably configured to allow the user to modify the location of the first and/or second point, e.g. using the techniques discussed in more detail below.

In other embodiments of the present invention, the distance between first and second points in the facial image is preferably determined using additional information provided by the local user, instead of by being determined automatically. For example, the local user preferably provides an indication of the location of the first and second points in the facial image to the central controller.

Thus, in a particularly preferred embodiment, the scaling information provided by the user comprises: a physical distance between two points that are viewable in the facial image provided by the user; and an indication of the location of the two points in the facial image. Accordingly, when the physical distance provided by the local user is the pupillary distance, the local user preferably further provides an indication as to location of the pupils, and preferably the pupil centres, in the facial image.

The local user can provide the indication as to the location of the two points in the facial image by any suitable and desired means. In a particularly preferred embodiment, however, the method further comprises the step of displaying the facial image to the local user, and the local user is preferably able to indicate on the facial image, e.g. by using a computer mouse or other suitable input device that is operatively connected to the local user terminal, the location of the two points. The system of the present invention preferably also comprises means for carrying out this step.

Once the facial image distance has been determined, e.g. using one of the techniques discussed above, the determined facial image distance can preferably be used together with the corresponding physical distance provided by the local user to determine the scale for the facial image.

As mentioned above, it is also contemplated by the Applicant, in other less preferred aspects and embodiments of the present invention, that instead of the local providing a facial image and information for use in determining a scale for the facial image separately, the local user may instead provide a facial image that contains within it the information needed to determine a scale for image.

Thus, according to another aspect of the present invention, there is provided a method, comprising:
a local user providing a facial image having facial and non-facial portions, wherein a non-facial portion of said image can be used to determine a scale for the facial image; and
receiving, at a central controller, the facial image provided by the user;
the method further comprising:
determining a scale for the facial image provided by the user using a non-facial portion of the image; and
using the determined scale for the facial image to superimpose the facial image and an image of an eyeglass frame, to thereby create a composite image to be viewed by a local user.

The present invention extends to a system for carrying out the steps of the method in accordance with any of its aspects or embodiments.

Thus, in accordance with a further aspect of the present invention, there is provided a system, comprising:
a central controller for receiving a facial image from a local user, wherein the facial image has facial and non-facial portions, and wherein a non-facial portion of said image can be used to determine a scale for the facial image;
means for determining a scale for the facial image provided by the user using a non-facial portion of the image; and
means for using the determined scale for the facial image to superimpose the facial image and an image of an eyeglass frame, to thereby create a composite image to be viewed by a local user.

In such aspects and embodiments of the invention, the facial image provided by the local user contains one or more portions that each show an area of a person's face (the "facial portions") and one or more other portions that do not show an area of the person's face (the "non-facial portions"). Further, the facial image has been created in such a manner that a non-facial portion of the image can be used to subsequently determine a scale for the facial image. For example, the person in the facial image could hold an object of a known dimension or that indicates a known scale when an image grabber, such as a camera, is used to create the facial image. This object, which will be held at substantially the same distance from the image gabber as the person's face, e.g. by being held across the bridge of the nose or next to the face (this latter option meaning that the face is not obscured by the object), will appear in the facial image as a non-facial portion, and provides the physical distance that is needed, as discussed above, to determine a scale for the facial image.

It will therefore be appreciated that the method of the present invention preferably further comprises the step of creating a facial image having facial and non-facial portions, wherein a non-facial portion of said image can be used to determine a scale for the facial image, and the system preferably comprises means, such as an image grabber (e.g. camera or the like), for carrying out such a step.

It will also be appreciated that the non-facial portion of the facial image that is used to determine the scale for the facial image preferably comprises an image of an object of a predefined length and/or an object having a plurality of graduations spaced apart by a predefined distance. In such embodiments, it will be understood that the physical dimension of the object, e.g. its length or the spacing between the graduations, is known to the system, for example, by the object being provided to the user by the supplier. Alternatively, in other less preferred embodiments, the physical dimension of the object can be provided by the local user to the central controller together with the facial image.

As will be appreciated by those skilled in that art, these aspects and embodiments of the present invention can and preferably do include any one of the preferred and optional features of the invention described herein as appropriate.

For example, the step of determining a scale for the facial image preferably comprises determining the distance in the facial image (i.e. the "facial image distance") that corresponds to the physical distance indicated by the object forming the non-facial portion of the image. In other words, in preferred embodiments of the present invention, the length of the object as it appears in the facial image is determined (if the object is of a given length) or the distance between two graduations as they appear in the facial image is determined (of the object id provided with a plurality of equally spaced graduations). As discussed above, the facial image distance can be determined in any suitable and desired manner. For example, the distance may be determined automatically by the system or the distance may be determined using information provided by the user.

Once the facial image distance has been determined, the determined facial image distance is preferably used together with the corresponding physical distance associated with the object forming the non-facial portion of the image to determine the scale for the facial image.

In accordance with the present invention, the facial image provided by the local user is superimposed on or with an image of an eyeglass frame. The image of the eyeglass frame, as discussed in more detail below, is preferably one of a plurality of eyeglass frame images that are stored by the system, and which has been selected by the local user.

In a preferred embodiment of the present invention, the method further comprises the step of presenting the local user with information relating to a plurality of eyeglass frames that may be selected, and the system comprises means for carrying out this step.

The information relating to each of the eyeglass frames may be of any form that enables the local user to make a selection from the plurality of available frames. For example, and in a preferred embodiment, the information comprises one or more images for each eyeglass frame that show, for example, the eyeglass frame from one or more views, e.g. a front view, a side view, a perspective view, etc. Thus, in a preferred embodiment, the method of the present invention comprises displaying an image or images of each of the plurality of eyeglass frames available for selection to the local user. The user is preferably presented with the images via a local user terminal, and preferably via a website.

Thus, in a particularly preferred embodiment, the method further comprises the step of the local user providing an indication of a desired eyeglass frame to the central controller. In preferred embodiments, the user provides such an indication by selecting an image of a frame (or frame style) from a plurality of images displayed on a website. Accordingly, in the present invention, the image of an eyeglass frame that is superimposed on or with the provided facial image is preferably an image of a user selected eyeglass frame.

The image of an eyeglass frame that is used with the provided facial image to create the composite image (i.e. the "superimposable frame image") may be one of the images that is displayed to the local user to enable them to select a particular eyeglass frame. Alternatively, the superimposable frame image may be a different image from those that are displayed to the local user, e.g. on the website, for the purposes of making a selection. This allows, for example, images of a lower quality (resolution) to be displayed on the website, thereby reducing the amount of data that is needed to be sent to the local user terminal.

The superimposable frame image can be of any suitable and desired form. As will be appreciated, however, the frame image preferably comprises a front view of the frame (so as to correspond to the front face view of the facial image).

The system of the present invention preferably comprises a database having a plurality of images of eyeglass frames that are available for selection by the local user. The database is preferably stored on suitable means, such as a computer readable medium, e.g. memory, and is accessible by the central controller.

The database preferably stores the plurality of superimposable frame images used in the present invention. In some embodiments, the database stores a superimposable image for each selectable eyeglass frame style, instead of for each individual selectable eyeglass frame. In other words, when, for example, an eyeglass frame style is available in two or more different colours, a single image may be stored in the database for each eyeglass frame style which can be rendered, e.g. using a suitable texture or filling technique, with the desired colour or pattern selected by the local user. This means that a suitable superimposable image for each of the eyeglass frames in a particular range can be generated from a single initial image. Alternatively, in other embodiments, the database may store a superimposable image for each selectable eyeglass frame.

Preferably, and as discussed above, the database also stores one or more images for each eyeglass frame style, or alternatively for each eyeglass frame, that can be viewed by the local user on a website for use in selecting a desired eyeglass frame. For example, the database preferably stores a plurality of images for each eyeglass frame or frame style showing the frame from a plurality of different views, e.g. a front view, a side view, a perspective view, etc.

In accordance with the present invention, the image of the, preferably user selected, eyeglass frame is superimposed on the facial image using the determined scale for the facial image. As will be recognised by those skilled in the art, by determining the scale for the facial image before the two images are superimposed, it allows one or other, or both, of the images to be suitably rescaled (or resized) as required prior to the creation of the composite image, thereby leading to a significantly improved composite image in comparison to those produced in conventional systems.

It will be understood that to modify the one or both of the images in this manner, e.g. such that both images are of a corresponding scale, necessitates a knowledge of both the scale for the facial image and the scale for the frame image. In the present invention, the scale for the facial image is determined using information provided by the local user, e.g. in the manner set out above. The scale for the frame image, meanwhile, is preferably already known to the system, and in particular is known to, or accessible by, the means for superimposing the two images, since the plurality of superimposable frame images are provided by the supplier. In other words, the supplier is aware of the physical dimensions of the frame when the creating the frame images, and so is able to calculate the scale for each of the frame images (the scale preferably being the same for each of the images) and provide this information to the system with the plurality of frame images. Thus, it will be appreciated that the scale for the frame image used in the present invention is preferably predefined, or can be said to be predetermined.

Accordingly, the present invention preferably comprises the central controller or means for superimposing the facial and frame images obtaining the scale for the frame image.

For example, the scale may be stored in a database, e.g. that containing the plurality of frame images, or any other suitable data storage means, such as a memory, and the present invention preferably comprises retrieving the stored scale for the selected frame image. Alternatively, the means for superimposing the facial and frame images may determine the scale for the frame image, e.g. using information associated with the frame image (and which was preferably provided by the supplier).

It will be appreciated that the step of superimposing the facial image and the frame image in the present invention preferably comprises modifying (e.g. scaling) one of the images, i.e. such that both of the images are of a corresponding scale, using the determined scale for the facial image and a, preferably predefined and/or obtained, scale for the frame image.

As those skilled in the art will understand, the scaling step may comprise enlarging or reducing, as appropriate, either of the facial image or the frame image. In a preferred embodiment, however, the facial image is resized to be of a corresponding scale to the frame image. This means that the composite image will be of the same, preferably known, scale as the frame image, thereby allowing, for example, the image to be more easily displayed to a local user on a website.

It will be understood that references herein to resizing and (re)scaling the facial image and/or the frame image are intended to mean, unless the context requires otherwise, that the images are enlarged or reduced whilst maintaining the aspect ratio of the original image (i.e. the images are not distorted, stretched, etc).

Once the facial image and/or the frame image have been suitably resized, the images are superimposed, e.g. using any suitable and desired image processing technique as known in the art, to create a composite image.

In certain embodiments, the images may be superimposed to create a final composite image, i.e. one that shows the eyeglass frame correctly positioned on the face of the person in the facial image. Such a final composite image may be, and preferably is, generated if the images have been suitably aligned relative to each other, e.g. as discussed in more detail below, before being superimposed.

Alternatively, in other embodiments, the two images may be superimposed to create a first (or initial) composite image. This first composite image may, for example, comprise a superposition of the facial image and the frame image wherein the frame (although of the correct size relative to the face) is not positioned correctly on the face. Preferably, the first composite image may then be manipulated, e.g. either automatically by the system or on the instruction of the local user, so as to form the final composite image. The first composite image may be converted directly into the final composite image or, in other embodiments, in may be converted firstly into one or more second (or intermediate) composite images before the final composite image is eventually created.

The step of superimposing the facial and frame images preferably further comprises aligning one of the images relative to the other such that the two images are correctly positioned with respect to each other (e.g. the eyeglass frames are in the correct position on the face). This step may be performed before one or other of the images is resized. However, in a particularly preferred embodiment, and for reasons that will be discussed in more detail before, the step is performed after the scaling step.

The two images can be aligned relative to each other in any suitable and desired manner, and may, for example, comprise at least one, and preferably both, of translating and rotating one of the facial and frame image relative to the other.

In a preferred embodiment, the images may be correctly positioned with respect to each other automatically by the system. For example, the system may be configured to translate and/or rotate, as appropriate, one of the images such that two points in the image are placed at corresponding locations in the other image.

As will be appreciated, any two points could be used in the images to perform the alignment step. However, in a particularly preferred embodiment, the images may be appropriately aligned by positioning the two predefined locations in the frame image that correspond to the positions where the pupils will typically be (or at least should be) when the frame is being worn at the locations in the facial image that correspond to the pupil centres. Aligning the two images in this manner is of particular benefit as the two locations in the frame image are preferably known to the supplier, and can thus be provided to the system (e.g. along with the scale for the frame image). In other words, the two locations in the frame image are preferably predefined. Moreover, the pupil centres in the facial image have preferably already been determined when determining the scale for the facial image, and are thus again already known to the system.

Alternatively, in other embodiments, the system may be configured to translate and/or rotate, as appropriate, one of the images such that a point in the image is placed at a corresponding location in the other image and such that a vector (or defined direction) in the image is aligned to a corresponding vector (or direction) in the other image.

As will be appreciated, any point and vector could be used in the images to perform the alignment step. However, in a particularly preferred embodiment, the images may be appropriately aligned by: positioning the, preferably predefined, location in the frame image that corresponds to a position where one of the pupils will typically be (or at least should be) when the frame is being worn at the location in the facial image that corresponds to the equivalent pupil centre; and aligning the line running through the pupil centres in the facial image with the corresponding line running through the pupil centres in the frame image.

Accordingly, and as will be appreciated by those skilled in the art, the step of aligning one of the images relative to the other preferably comprises at least one, and preferably all, of the following steps: (i) aligning the facial and frame images along a first axis (e.g. the "x-axis") such that the pupils in the facial image are equidistance from the centre of the frame; (ii) aligning the facial and frame images along a second, perpendicular axis (e.g. the "y-axis"), whilst maintaining the position along the first axis, such that the frame is located at a particular distance relative to the pupils based on where the pupils are normally located in the selected eyeglass frame; and (iii) rotating one or other of the facial and frames images such that the images are of the same orientation, e.g. by rotating the frame image so that the frame is appropriately aligned with a line running through the two pupil centres. As will be appreciated, these three steps can be performed in any order as desired.

In another preferred embodiment, the images may be correctly positioned with respect to each other by the user, instead of being performed automatically by the system. In such embodiments, the method preferably further comprises the step of displaying a first (or initial) composite image to the local user, wherein the facial and frame images, although being of a corresponding scale, are not appropriately aligned. The local user is preferably then able to manipulate (e.g. translate and/or rotate) one or other of the facial and frame images that constitute the composite image, e.g. by using a computer mouse or other suitable input device that is operatively connected to the local user terminal, so as to correctly align the images, and thereby create the final composite image.

Once the final composite image has been created, i.e. a composite image showing the, preferably user selected, eyeglass frame correctly positioned on the face of the person in the facial image provided by the local user, the image is preferably displayed to the local user, e.g. on the website. The user is therefore able to make a decision as to whether they are happy with their chosen eyeglass frames before, for example, requesting that the eyeglasses be manufactured. Alternatively, or additionally, the composite image may be displayed to a different local user, e.g. on the website or as an image in an e-mail. For example, if the local user who provided the facial image is not the person in the image, then it may be desired to send the composite image to the end user (i.e. the person in the facial image).

As will therefore be appreciated, the central controller is preferably connected to a plurality of local user terminals, each terminal being associated with a different local user, e.g. via the Internet.

Preferably, the composite image created in the present invention is preferably stored, e.g. in the central controller or a data storage means accessible by the central controller, such that the local user can view the image again, if desired, at a later time. Thus, it will be appreciated that the method of the present invention preferably further comprises the step of storing the composite image (after it has been created). Preferably, the composite image is stored together with a unique identifier, such as one associated with the local user. This therefore allows the central controller to retrieve the correct image when requested by the local user.

In a particularly preferred embodiment, once a local user has viewed the composite image and is satisfied with the eyeglass frame that has been selected, the user (who may be the same local user who provided the facial image or, for example, the end user) preferably provides an indication to the central controller that a corresponding eyeglass frame or pair of eyeglasses is desired. In other words, the user preferably places a request (or order) with the supplier for the eyeglass frame in the composite image or for a pair of eyeglasses to be manufactured using the eyeglass frame in the composite image. Preferably, the order is placed by the user using a local user terminal, which is operatively connected to the central controller via a communication link, such as the Internet, and preferably via a user interface in the form of a website.

The method of the present invention therefore preferably further comprises using the information provided by the local user to the central controller in the creation of the composite image, such as the pupillary distance, and/or additional information, such as that contained in the end user's optical prescription (e.g. spherical, cylindrical, axis data, etc), to manufacture a pair of eyeglasses, which preferably corresponds to that shown in the composite image. As will be appreciated, the pupillary distance that is preferably used in the manufacture of the eyeglasses may be provided by the user or alternatively, in those embodiments in which the facial image contains an object indicating a particular physical distance, may be determined from the facial image. In other words, the method preferably comprises: a local user, after viewing the composite image, requesting a pair of eyeglasses (corresponding to that shown in the composite image); receiving the request at the central controller; and the local user subsequently receiving the pair of eyeglasses. Thus, the method preferably further comprises the step of dispatching the selected eyeglass frame or the selected pair of eyeglasses to the user.

The step of manufacturing the pair of eyeglasses may comprise manufacturing the eyeglass frames and mounting lenses (e.g. in accordance with the end user's prescription) in the eyeglass frame. Alternatively, the step of manufacturing may comprise mounting lenses in an appropriate pre-existing eyeglass frame. In both cases, however, it will be appreciated that the manufacturing step provides a pair of eyeglasses ready for use by a user.

The pair of eyeglasses may be manufactured at the same location as the central controller, or they may be manufactured at a different location to the central controller (and the user location).

The eyeglass frames referred to herein may be of any type. For example, they may be for use in providing any form of eyeglasses, e.g. for correcting sight, protecting the eyes, fashion use, etc. Thus, if lenses are provided (e.g. as part of a manufacturing step as discussed above), the lenses may be, for example, prescription lenses, non-corrective lenses, tinted lenses, protective lenses, etc.

It will be appreciated that the local user may, in embodiments of the present invention, provide a plurality of facial images to the central controller, e.g. in a manner as described above. In such embodiments, the method preferably comprises the step of superimposing each of the received facial images on or with the, preferably user selected, eyeglass frame image, thereby creating a plurality of composite images to be viewed by a local user or users.

It will also be appreciated that the local user may, in embodiments, provide one or more additional images, i.e. in addition to the facial image, to the central controller that show the person in the facial image from another angle (or from a number of other angles), e.g. such as a side profile view. These one or more additional images will preferably have been created such that they have the same scale as the facial image. Accordingly, one or more additional composite images may be created (using the scale determined for the facial image) and made viewable to the local user, e.g. by superimposing suitable eyeglass frame images on the one or more additional images, showing the person wearing a selected eyeglass frame from one or more other angles.

It will also be appreciated that the local user may, in embodiments of the present invention, provide an indication of a plurality of desired eyeglass frames to the central controller, e.g. in a manner as described above. In such embodiments, the method preferably comprises the step of superimposing the received facial image with a plurality of separate eyeglass frame images (that correspond to the frames indicted by the user) to create a plurality of composite images to be viewed by a local user.

It will also be appreciated that the central controller may receive facial images, information for determining a scale for the facial images and any of the other information as discussed above from each of a plurality of different local users in different local user locations. The users may even be located in different countries. Thus, in embodiments, the user referred to herein who provides the facial image and associated information may be a first local user, and the system may receive such images and information from each of one or a plurality of additional local users. The system may be readily used with any number of users when implemented as an Internet-based system.

It will also be appreciated that references herein to a communications link may be of any suitable and desired form, and may be a wireless or wired link. The link may be direct or indirect, and may be short or long range.

The methods in accordance with the present invention may be implemented at least partially using software, e.g. computer programs. It will thus be seen that when viewed from further aspects the present invention provides computer software specifically adapted to carry out partially or fully the methods described herein when installed on data processing means, and a computer program element comprising computer software code portions for performing partially or fully the methods described herein when the program element is run on data processing means. The invention also extends to a computer software carrier comprising such software which when used to operate a personal communications system or hands free device comprising data processing means causes in conjunction with said data processing means said system or device to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software and thus from a further broad aspect the present invention provides computer software and such software installed on a computer software carrier for carrying out at least one of the steps of the methods set out hereinabove.

For the avoidance of doubt, it will also be appreciated, even if not explicitly stated, that the present invention extends to systems for implementing any of the method steps referred to herein. Similarly, the present invention also extends to methods involving any of the steps carried out by a system described herein.

A preferred embodiment of the present invention will now be described, by way of example only, and with reference to the accompanying drawing, in which:
Figure 1 shows an exemplary system for implementing the present invention;
Figure 2 is a flow diagram illustrating the steps of determining the scale of a facial image in accordance with an embodiment of the present invention;
Figure 3 is a flow diagram illustrating the steps of creating a composite image in accordance with an embodiment of the present invention; and
Figure 4 is a flow diagram illustrating the steps of manufacturing and dispatching a pair of eyeglasses in accordance with an embodiment of the present invention.

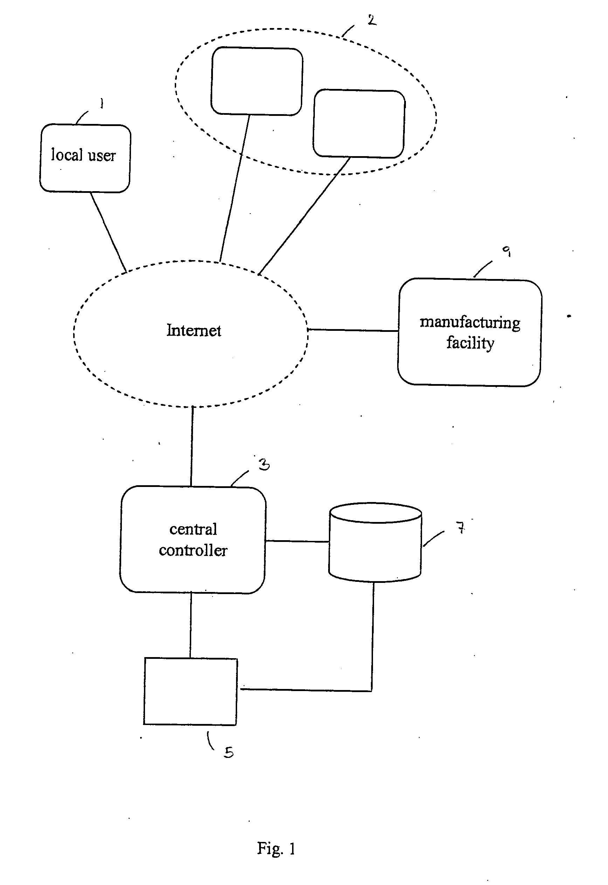

As shown in Figure 1, the method of the present invention is preferably implemented as a distributed system using the Internet. As can be seen, a local user 1 interacts with a central controller 3, such as a central server, via a website using a user terminal. The central controller 3 is connected to a processing means 5, which may be a processor within the central controller or an processor separate from the controller. The processing means 5, as will be discussed in more detail below, is programmed so as to superimpose a facial image that is provided by the local user 1 onto one of a plurality of frame images that are stored in a database 7, so as to thereby create a composite image. Then, depending on whether the local user 1, or another local user 2 (such as the end user) approves of the composite image, the central controller 3 may instruct a manufacturing facility 9 to prepare a pair of eyeglasses corresponding to those in the composite image. Once made, the eyeglasses are subsequently dispatched to the user who placed the order.

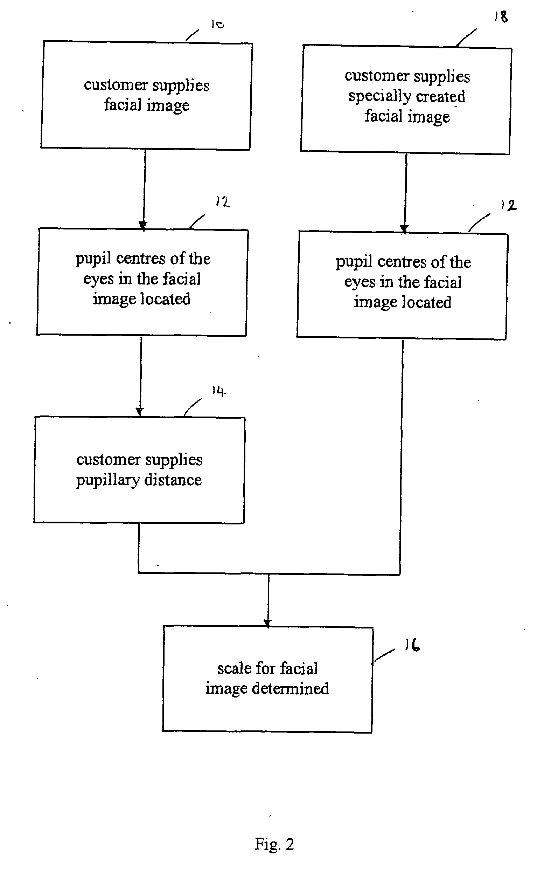

A method describing how the facial image is received by the central controller 3 and how the scale for that facial image is determined will now be described with reference to Figure 2.

First, a customer, i.e. the local user 1, supplies a facial image to the central controller - step 10. The facial image may be an image of the customer's face or it may be an image of someone else for whom the customer is buying the eyeglasses. The facial image should show the front of the person's face, and should show the entirety of the face, such as in the manner of a passport photograph.

Normally, the customer will upload the facial image to the supplier's website, i.e. the central controller 3, as a computer readable image file. It is contemplated, however, that the facial image may be sent to the supplier in a physical form, e.g. as a printed photograph. In such cases, the supplier will scan in the photograph, upload the digitial image to the central controller 3, and notify the customer that this has been done (e.g. by sending the customer an e-mail).

In step 12, once the facial image has been uploaded, it is next established on the image where the pupils of the eyes are located. This can be performed automatically, e.g. by the processing means 5, or the location can be provided by the customer. In this latter case, the uploaded facial image is displayed to the customer, and the customer identifies on the image the position of the pupils, e.g. by using a point and click technique.

Next, in step 14, the customer provides the supplier with the pupillary distance for the person in the facial image. Typically the customer will do this by inputting the data to the supplier's website. Alternatively, however, the customer could supply the information by other means, for example, by sending the supplier a copy of the person's optical prescription. The pupillary distance can usually be found on the optical prescription that is received after having an eye test, although it can easily be measured by the customer if required.

Instead of performing steps 10 and 14, the customer may instead supply a specially created facial image - step 18. In this facial image, the person in the image holds an object of a known length or that shows a known length using a plurality of graduations next to or pressed against their face. As above, once the specially created facial image has been uploaded, it is established on the image where the pupils of the eyes are located - step 12.

The processing means 5, on receipt of the facial image and the above information, is now able to calculate the scale for the facial image - step 16. This is achieved by comparing the pupillary distance supplied by the customer (typically in millimetres) with the distance (in terms of pixels) between the pupils that were identified in the supplied image. Alternatively, the processing means 5 on receipt of the specially created facial image calculates the scale for the facial image by comparing the known physical distance for the object in the facial image with the corresponding distance in the image.

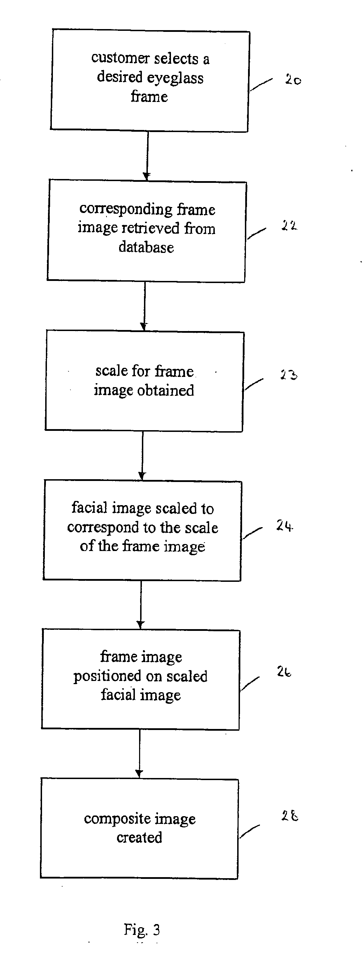

A method describing how the determined scale for the facial image is used to create a correctly scaled composite image of the person in the image wearing a selected eyeglass frame will now be described with reference to Figure 3.

The customer is able to view on the supplier's website images of a plurality of eyeglass frames that are available for selection. These images are stored either in the central controller 3 or in the database 7. On reviewing the images, the customer selects one or more of the frames that they would like to see as a composite image, i.e. an image showing the selected eyeglass frame on the facial image that they provided - step 20.

A frame image that corresponds to the, or one of the, selected eyeglass frames is next retrieved by the central controller 3 from the database 7 - step 22. The central controller 3 also obtains the scale for the frame image, in step 23. As the frame images are provided by the supplier, and the supplier is aware of the physical dimensions of the frame, then the scale for the frame image will typically have been predetermined by the supplier. For example, in the situation where each frame image has a different scale associated with it, then the central controller 3 may retrieve the scale when retrieving the frame image from the database 7. Alternatively, if each frame image is designed to have the same scale, then the processing means 5 may be pre-programmed with this scale.

Next, in step 24, the facial image provided by the customer is resized so as to have the same scale as that of the frame image. This step is performed in the processing means 5 by comparing the scale determined for the facial image with the scale for the frame image.

Once the facial image has been modified so as to be of the same scale as the frame image, the two images need to be positioned with respect to each other such that the eyeglass frames in the frame image are at the correct location on the face in the facial image - step 26.

The two images can be appropriately positioned automatically by the processing means 5. For example, the supplier is aware of the location in each of the eyeglass frames where the pupils will, or should be, located when they are being worn. Accordingly, the supplier is able to determine the two locations in each frame image that need to be positioned over the pupils in the facial image, and this information can be stored along with each frame image and subsequently retrieved by the processing means 5. Using this information, and the knowledge previously determined or received from the user as to the position of the pupils in the facial image, the two images can be translated and rotated with respect to each as required so as to be correctly aligned. Thus, for example, the frame image is initially aligned relative to the facial image such that the pupils are at equal distances from the centre of the frame and positioned where pupils with the required pupillary distance would fall. The frame image is next moved such that the frame is at the appropriate height on the face relative to the pupils as dictated by the style of the selected frame. Finally, the frame image is rotated relative to the facial image such that the frame is appropriately aligned in relation to the line running through the centres of the two pupils. Once correctly aligned, the two images are then superimposed to create a composite image that can be viewed by the customer - step 28.

Alternatively, the two images can be correctly aligned by the customer. In this case, the customer is able to view the two, now correctly scaled, images on the website, and can adjust the relative position and angle of each of the images on the screen. Once the customer is happy with the relative alignment of the two images, the alignment information can be sent to processing means 5 (via the central controller 3) and the final composite image can be created.

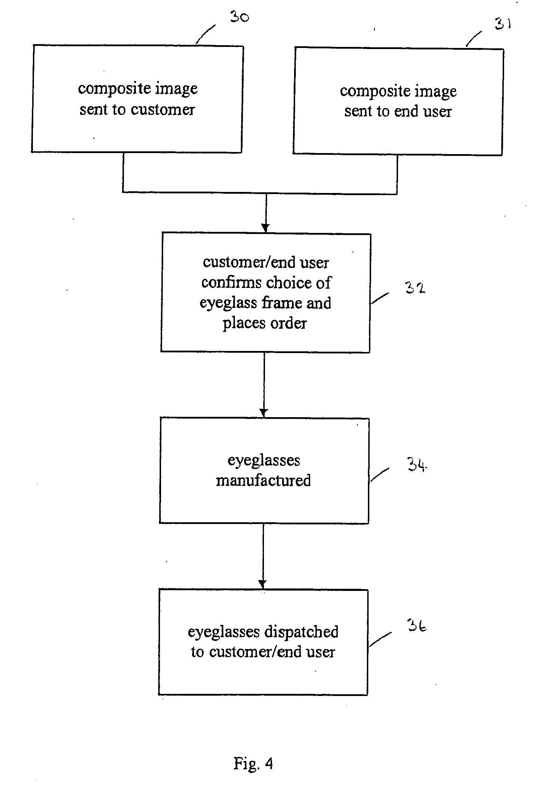

Upon the creation of the composite image, the customer is able to place an order for a pair of eyeglass frames to be manufactured corresponding to those in the composite image. The method for doing this is will now be described with reference to Figure 4.

As shown in Figure 4, the composite image created by the processing means 5 can be sent to the customer (step 30), e.g. so that they can view the image on the website. If the customer initially selected a number of eyeglass frames, then the customer may be sent a composite image for each of the frames.

One or more of the composite images may also be sent to the end user, i.e. the person in the facial image, if the end user is a different person from the customer (step 31). For example, the end user may be sent a link to the website where the composite image can be viewed. Alternatively, the end user may be sent the composite image itself as an attachment to an e-mail.

If the customer or end user decides, e.g. after looking at the composite image, that they would like a pair of eyeglasses corresponding to those in the composite image, then they can place an order requesting this using the supplier's website (step 32). When placing this order, the customer or end user would need to provide the supplier with any required information that had not already been provided, such as the details of their optical prescription, financial (e.g. credit/debit card) details, etc.

On receipt of the order from the customer or end user, the central controller 3 sends an appropriate order, and the necessary information (e.g. which eyeglass frame was selected, details of the person's optical prescription, etc) to the manufacturing facility 9, whereupon the eyeglasses are subsequently manufactured. This may involve inserting appropriate lenses into a pre-existing frame, or the eyeglass frames may themselves be manufactured and the lenses inserted therein.

After the eyeglasses have been manufactured, they are then dispatched to the customer or end user, as appropriate (step 36).

## Claims

1. A method, comprising:
a local user providing a facial image and information for use in determining a scale for the facial image; and
receiving, at a central controller, the facial image and the information provided by the user;
the method further comprising:
determining a scale for the facial image using the information provided by the user; and
using the determined scale for the facial image to superimpose the facial image and an image of an eyeglass frame, to thereby create a composite image to be viewed by a local user.

2. The method of claim 1, wherein the local user uses a local user terminal to provide one or both of the facial image and the information for use in determining a scale for the facial image.

3. The method of claim 1 or 2, wherein the facial image is provided by the user in a digital format, preferably wherein the facial image is a computer readable image file.

4. The method of any preceding claim, wherein the scaling information comprises a physical distance between two points that are viewable in the facial image provided by the user, preferably wherein the scaling information comprises the physical distance between first and second points of the eyes, and most preferably wherein the scaling information comprises the pupillary distance (PD).

5. The method of claim 4, wherein the step of determining a scale for the facial image comprises a step of determining the distance in the facial image between the first point and the second point as they appear in the facial image.

6. The method of claim 5 wherein the system is arranged to automatically determine the distance between the first and second points in the facial image.

7. The method of claim 5 wherein the user provides an indication of the location of the first and second points in the facial image to the central controller.

8. The method of any preceding claim wherein the image of the eyeglass frame is one of a plurality of eyeglass frame images that are stored by the system, and which has been selected by the local user.

9. The method of any preceding claim, wherein the method comprises the step of superimposing the facial and frame images to create an initial composite image, wherein the initial composite image may then be manipulated on the instruction of the local user so as to form a final composite image.

10. The method of any preceding claim, further comprising using the information provided by the local user to the central controller in the creation of the composite image to manufacture a pair of eyeglasses, preferably which corresponds to that shown in the composite image.

11. A system, comprising:
a central controller for receiving a facial image and information for use in determining a scale for the facial image from a local user;
means for determining a scale for the facial image using the information provided by the user; and
means for using the determined scale for the facial image to superimpose the facial image and an image of an eyeglass frame, to thereby create a composite image to be viewed by a local user.

12. The system of claim 11, further comprising a local user terminal in communication with the central controller, wherein the local user uses the local terminal to provide at least one, and preferably both, of the facial image and the scaling information.

13. The system of claim 11 or 12, further comprising a database having a plurality of images of eyeglass frames that are available for selection by the local user.

14. The method or system of any preceding claim, wherein the method or system is internet based.

15. Computer software and such software installed on a computer software carrier for carrying out the steps of the methods claimed in any of claims 1 to 10.
